# EUROPÄISCHE PATENTSCHRIFT

(11) **EP 1 681 190 B1**
(45) Veröffentlichungstag und Bekanntmachung des Hinweises auf die Patenterteilung: **09.03.2011**
(21) Anmeldenummer: 06000376.1
(22) Anmeldetag: 10.01.2006
(51) Int. Cl.: B60G 17/02, B60G 15/06, H02K 7/06, F16F 15/02

(54) **Federträger mit verstellbarem Federteller**
Spring support with adjustable spring plate
Support de ressort pourvu d'une coupelle de ressort réglable

(30) Priorität: 14.01.2005 DE 102005053493; 14.01.2005 DE 102005001744
(43) Veröffentlichungstag der Anmeldung: 19.07.2006
(73) Patentinhaber: ZF Friedrichshafen AG, 88046 Friedrichshafen (DE)
(72) Erfinder: Münster, Martin, 88046 Friedrichshafen (DE); Mair, Ulrich, 88045 Friedrichshafen (DE); Baasch, Detlef, 88048 Friedrichshafen (DE)

(56) Entgegenhaltungen:
- DE-A1- 10 122 542
- DE-A1- 10 237 644
- DE-A1- 19 510 032
- DE-B3- 10 255 764
- FR-A- 2 840 257
- JP-A- 11 108 100

## Beschreibung

Die Erfindung betrifft einen Federträger mit verstellbarem Federteller gemäß dem Oberbegriff von Patentanspruch 1.

Aus der gattungsbildenden DE 102 55 764 B3 ist ein Fahrzeugfahrwerk bekannt, das einen Federträger umfasst, der einen verstellbaren Federteller für eine Tragfeder aufweist. Zur Axialverstellung des Federtellers dient ein Aktuator in der Bauform eines E-Motors, der eine hohle Gewindespindel antreibt. Auf der Gewindespindel ist über ein Bewegungsgewinde eine Gewindemutter gelagert, die wiederum mit dem verstellbaren Federteller verbunden ist. Eine Drehbewegung des Rotors wird über die Gewindespindel-Gewindemutter in eine Axialbewegung des Federtellers umgesetzt. Die Tragfeder muss bei einem PKW z. B. die Viertellast des gesamten Fahrzeugs abstützen. Dabei wird die Federkraft über die Gewindemutter-Gewindespindel auf den Rotor und weiter auf ein Gehäuse des E-Motors übertragen, das über ein winkel- und stoßelastisches Anschlusslager mit einem Fahrzeugaufbau verbunden ist.

Innerhalb der hohlen Gewindespindel erstreckt sich eine Kolbenstange eines konventionellen Schwingungsdämpfers. Am äußeren Ende der Kolbenstange ist ein Axiallager angeordnet, das einen gewissen Freigang der Kolbenstange zum Fahrzeugaufbau erlaubt. Über ein topfförmiges Bauteil, an dem sich auch das Gehäuse des Aktuators abstützt, ist die Kolbenstange an dem Anschlusslager befestigt. Daraus folgt, dass zwischen der Kolbenstange und dem Aktuator keine Relativbewegung stattfinden kann.

Die in dem Schwingungsdämpfer auftretenden hochfrequenten Dämpfkräfte werden über das Anschlusslager auf den Fahrzeugaufbau übertragen. Das Anschlusslager ist aufgrund der auftretenden Federkräfte derart steif ausgeführt, dass die Dämpfkräfte nahezu ungefedert auf den Fahrzeugaufbau übertragen werden, wobei deutlich hörbare Geräusche auftreten werden.

Eventuell auftretenden Querkräfte von der Tragfeder auf die Gewindespindel werden über ein Nadellager von der Kolbenstange des Schwingungsdämpfers abgestützt. Damit wird aber innerhalb des Schwingungsdämpfers eine Querkraft erzeugt, die eine erhöhte Reibung zwischen der Kolbenstange und einer nicht dargestellten Kolbenstangenführung mit sich bringt. Folglich liegt ein Komfortverlust aufgrund erhöhter Haftreibung im Schwingungsdämpfer vor.

Ein weiterer Nachteil dieses Federträgers besteht darin, dass sich der Schwingungsdämpfer im Reparaturfall nur sehr aufwändig demontieren lässt. Dazu muss der gesamte Federträger aus dem Fahrzeug entfernt werden. Dann lässt sich das Gehäuse mit dem Stator, sowie ein Sicherungsring entfernen, um die Kolbenstange aus der Gewindespindel herauszuziehen. Bei näherer Betrachtung muss man feststellen, dass sich auch die Montage des Schwingungsdämpfers recht beschwerlich gestaltet, da der Druckanschlag mit der Kolbenstange verstemmt ist und die Gewindespindel einen deutlich kleineren Innendurchmesser aufweist, als der Außendurchmesser des Druckanschlags.

Die DE 195 10 032 A1 beschreibt einen Federträger, der ein nicht näher beschriebenes Rohr aufweist, dass die Kolbenstange des Federträgers einhüllt und damit zwischen der Kolbenstange und der Gewindespindel angeordnet ist. Gemäß der bildlichen Darstellung ist die Gewindespindel auf dem besagten Rohr gelagert.

Weiterhin offenbart das Dokument DE 102 37 644 A1 ein relevante Federträger, wobei das Gehäuse des Drehantziebs über ein erstes Lager (4) und die Stange über ein in Reihe mit dem Lager (4) zweites Lager unterstützt sind.

Aufgabe der vorliegenden Erfindung ist es, einen Federträger zu realisieren, der sich einerseits zusammen mit einem Schwingungsdämpfer einfach montieren lässt und von dem Querkräfte sicher aufgenommen werden können.

Erfindungsgemäß wird die Aufgabe durch die Merkmale des Patentanspruchs 1 gelöst.

Das Führungsrohr verhindert, dass sich die Gewindespindel unter der Belastung der Feder verformt und damit ggf. Klemmkräfte mit der Gewindemutter erzeugt. Des Weiteren besteht der große Vorteil, dass der Schwingungsdämpfer montiert oder demontiert werden kann, ohne dass Montagearbeiten z. B. am Aktuator notwendig wären.

Es wird auch eine besonders stabile Anbindung des Führungsrohrs erreicht. Funktional sind ein Lager für die Kolbenstange und das Anschlusslager in Reihe angeordnet, jedoch ergibt sich durch die unterschiedlichen Federraten eine deutliche Funktionstrennung, wobei über das Führungsrohr eine zusammenhängende Baueinheit zwischen den beiden Lagern geschaffen wird.

Die Anschlussfläche für das Anschlusslager ist an einem Anschlussflansch des Führungsrohrs ausgeführt. Der Anschlussflansch kann als zentrales Befestigungselement innerhalb des Federbeins genutzt werden.

Der Aktuator ist als ein Drehantrieb ausgeführt. Dabei kann sich auch eine Lagerung für einen Rotor des Drehantriebs an dem Anschlussflansch abstützen. Diese Variante garantiert einen sehr präzisen Rundlauf der Gewindespindel, da die Gewindespindel und der Rotor von einem gemeinsamen Bauteil zentriert werden.

Das Führungsrohr kann in Längsrichtung geteilt ausgeführt sein. Mit dieser Maßnahme können leichter Lagerstellen für Lager zwischen der Gewindespindel und dem Führungsrohr zugänglich gemacht werden.

Für die Montage des Schwingungsdämpfers ist es besonders vorteilhaft, wenn an dem Führungsrohr ein Druckanschlag befestigt ist, der ab einer definierten Einfahrstellung der Kolbenstange wirksam wird. Ein Druckanschlag wird häufig außerhalb des Zylinders auf der Kolbenstange befestigt. Damit könnte sich der Druckanschlag im Montageablauf störend auswirken, insbesondere wenn die Kolbenstange in das Führungsrohr eingeschoben wird. Mit der neuen Lösung tritt dieses Problem nicht auf.

Anhand der folgenden Figurenbeschreibung soll die Erfindung näher erläutert werden.

### Es zeigt:

- Fig. 1: Erfindungegemäßes Federbein in Schnittdarstellung
- Fig. 2: Federbein nach Fig. 1 mit Druckanschlag und geteiltem Führungsrohr

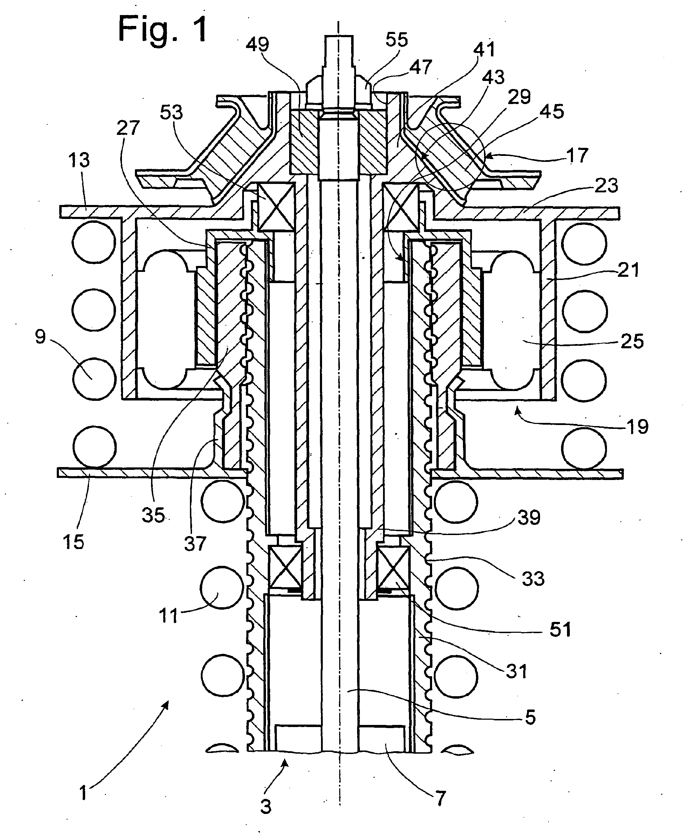

Die Figur 1 zeigt einen oberen Abschnitt eines Federbeins 1, das beispielsweise zwischen einer nichtdargestellten Fahrzeugachse und einem Fahrzeugaufbau angeordnet ist. Ein an sich bekannter Schwingungsdämpfer 3, der eine axial bewegliche Kolbenstange 5 in einem Zylinder 7 umfasst, wird von einer ersten und einer zweiten Feder 9; 11 eingehüllt. Die erste Feder 9 ist zwischen einem ersten Federteller 13 und einem zweiten Federteller 15 verspannt. Die zweite Feder 11 liegt an der Unterseite des zweiten Federtellers 15 und einem nicht dargestellten dritten Federteller an, der optional an dem Zylinder 7 oder einem Achsteil der Fahrzeugachse befestigt ist. Der obere Federteller 13 ist über ein kardanisch bewegliches Kopflager 17 mit dem Fahrzeugaufbau verbunden. An diesem Kopflager ist ebenfalls ein Drehantrieb 19 in der Bauform eines E-Motors angeschlossen. Der Drehantrieb umfasst ein Gehäuse 21 mit einem Boden 23, der einteilig mit dem oberen Federteller 13 ausgeführt ist.

In dem Gehäuse 21 ist ein ringförmiger Stator 25 angeordnet, der einen Rotor 27 mit einem u-förmigen Querschnitt antreibt. Auf einem axial verlaufenden Schenkel 29 des Rotors 27 ist eine Gewindespindel 31 befestigt, die auf ihrer äußeren Mantelfläche ein Bewegungsgewinde 33 aufweist. In das Bewegungsgewinde 33 greift eine Gewindemutter 35 ein, die über eine Zwischenhülse 37 mit dem zweiten Federteller 15 in Wirkverbindung steht. In Abhängigkeit der Drehbewegung des Rotors und damit der Gewindespindel führt die Gewindemutter eine translatorische axiale Bewegung aus, die von dem zweiten Federteller 15 synchron mit ausgeführt wird, wodurch sich die Gesamttragkraft der beiden Federn 9; 11 einstellen lässt, um z. B. eine Wankbewegung des Fahrzeugaufbaus zu kompensieren.

Ausgehend vom Anschlusslager 17 erstreckt sich innerhalb der Gewindespindel ein Führungsrohr 39. Das Führungsrohr ist in Axialrichtung und in Umfangsrichtung ortsfest zum Anschlusslager 17 gelagert, da ein Anschlussflansch 41 eine Anschlussfläche 43 zum Anschlusslager 17 aufweist. Des weiteren ist das Führungsrohr über den Anschlussflansch 41 mit dem Gehäuse 21 des Drehantriebs verbunden. Das Anschlusslager 17 verfügt über einen Elastomerkörper 45, so dass das Führungsrohr 39 zusammen mit dem Aktuator 19 und dem ersten Federteller 13 eine begrenzte Federbewegung ausführen kann.

Das Führungsrohr weist eine topfförmige Erweiterung 47 zur Aufnahme eines Lagers 49 für die Kolbenstange 5 auf, so dass sich das Lager 49 der Kolbenstange an dem Führungsrohr abstützen kann. Die Kolbenstange weist einen kleineren Außendurchmesser auf als der Innendurchmesser des Führungsrohres und die Federrate des zweien Lagers 49 ist kleiner als die des Elastomerkörpers 45, so dass die Kolbenstange über das zweite Lager 49 des Federbeins eine Relativbewegung zum Anschlusslager 17 ausführen kann, jedoch keine separate Befestigung am Fahrzeugaufbau benötigt.

Das Führungsrohr übernimmt auch eine Abstützfunktion für die Gewindespindel 31 des Drehantriebs. Dazu verfügt das Führungsrohr über eine Lagerung 51 zur Gewindespindel 31. Eine zweite Lagerung 53, die sich an der Unterseite des Anschlussflansches 41 abstützt, zentriert den Rotor 27 zusammen mit dem oberen Ende der Gewindespindel zum Führungsrohr 39.

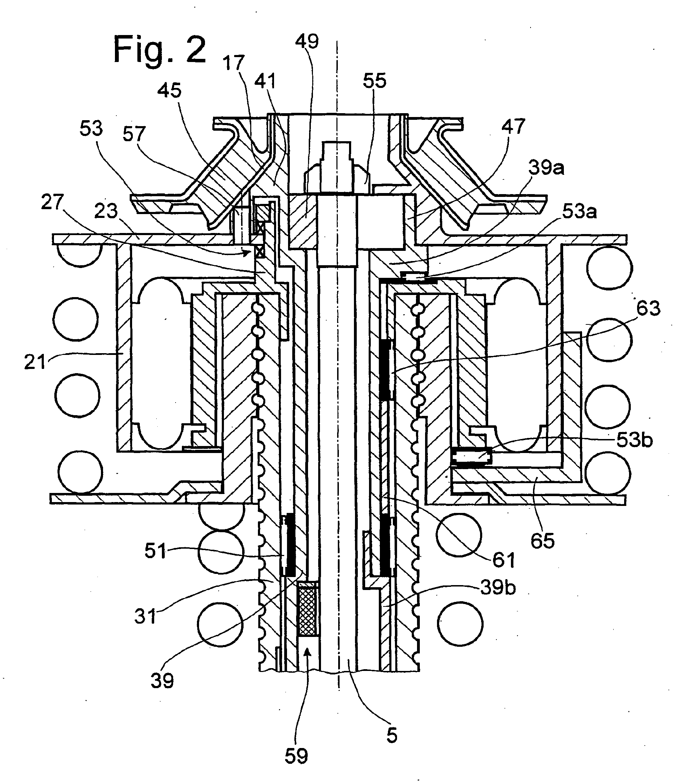

Die Figur 2 enthält zwei Ausführungsvarianten, die die Ausgestaltung des Führungsrohres 39, des Rotors 27 und des Gehäuse 21 mit dem Boden 23 betreffen. Abweichend zur Fig. 1 stellen das Gehäuse 21 und der Boden 23 eine Baueinheit dar, die über Befestigungsmittel 57 mit dem Anschlussflansch 41 des Führungsrohres verbunden ist. Die rotorseitige zweite Lagerung 53 der Gewindespindel 31 erfolgt über zwei unterhalb und oberhalb des Bodens 23 angeordnet Lager, die z. B. als Schrägkugellager in X- oder O-Ausrichtung ausgeführt sein können. Der Vorteil dieser Ausgestaltung im Vergleich zur Fig. 1 besteht darin, dass der Herstellungsaufwand für das Führungsrohr 39 und das Gehäuse 21 vereinfacht wird. Des weiteren ist in dem linken Halbschnitt ein Druckanschlag 59 dargestellt, der an dem Führungsrohr 39 befestigt ist und ab einer definierten Einfahrstellung der Kolbenstange 5 auf einer oberen Stirnfläche des Zylinders wirksam wird.

Der rechte Halbschnitt der Fig. 2 zeigt eine zweite Variante, die keinen Teil der beanspruchten Erfindung bildet, bei der die Lagerung des Rotors 27 und der Gewindespindel 31 über Nadellager ausgeführt ist. Des Weiteren ist das Führungsrohr 39 über den Boden 23 mit dem Anschlusslager 17 verbunden. Damit die Lager leicht montierbar bzw. demontierbar sind, ist das Führungsrohr 39 in Längsrichtung zweigeteilt ausgeführt. Ein erster Abschnitt 39a erstreckt sich von der topfförmigen Erweiterung 47 bis zur unteren Lagerung 51 der Gewindespindel. Ein zweiter Abschnitt 39b stützt die Lagerung 51 sowie eine Distanzhülse 61 bis zu einer oberen Lagerung 63 der Gewindespindel 31. Die rotorseitige Lagerung erfolgt über ein erstes Lager 53a zwischen dem Rotor und dem Führungsrohr 39 und ein zweites Lager 53b an einem unteren Boden 65 des Gehäuses 21. Damit umgreift das Gehäuse 21 mit seinen beiden Böden 23; 65 den Rotor 27, der über die beiden Lager 53a; 53b in Axialrichtung fixiert ist.

Durch die Verwendung des Führungsrohres 39 als ein von der Kolbenstange 5 getrenntes Bauteil kann der Schwingungsdämpfer 3 unabhängig von der Ausgestaltung des Führungsrohres und/oder des Gehäuses nach dem Lösen von Befestigungsmitteln 55 ohne Demontagearbeiten am restlichen Federträger aus dem Federträger entfernt werden.

## Patentansprüche

1. Federträger, umfassend einen Schwingungsdämpfer, welcher einen Zylinder aufweist, in dem eine Kolbenstange axial beweglich geführt ist, einen ersten und einen zweiten Federteller, zwischen denen eine Feder angeordnet ist, und einen Aktuator, der eine die Kolbenstange umgebende Gewindespindel und Gewindemutter aufweist, über den einer der Federteller in seiner Position axial einstellbar ist, wobei sich zwischen der Kolbenstange (5) und der Gewindespindel (31) ein Führungsrohr (39) erstreckt und sich die Gewindespindel (31) radial an dem Führungsrohr (39) abstützt
**dadurch gekennzeichnet,**
**dass** das Führungsrohr (39) eine Anschlussfläche (43) für ein Anschlusslager (17) des Federträgers (1) aufweist und die Kolbenstange über ein an dem Führungstohr abgestütztes zweites Lager (49) eine Relativbewegung zum Anschlusslager (17) ausführen kann, wobei das zweite Lager (49) eine kleinere Federrate als die des Anschlusslagers (17) hat.

2. Federträger nach Anspruch 1,
**dadurch gekennzeichnet,**
**dass** die Anschlussfläche (43) an einem Anschlussflansch (41) des Führungsrohrs (39) ausgeführt ist.

3. Federträger nach Anspruch 2,
**dadurch gekennzeichnet,**
**dass** der Aktuator als ein Drehantrieb (19) ausgeführt ist und sich die Lagerung (53) für einen Rotor (27) des Drehantriebs (19) an dem Anschlussflansch (41) abstützt.

4. Federträger nach Anspruch 1,
**dadurch gekennzeichnet,**
**dass** das Führungsrohr (39) in Längsrichtung geteilt ausgeführt ist.

5. Federträger nach Anspruch 1,
**dadurch gekennzeichnet,**
**dass** das Führungsrohr (39) mit dem Gehäuse (21) des Aktuators (19) verbunden ist.

6. Federträger nach Anspruch 1,
**dadurch gekennzeichnet,**
**dass** an dem Führungsrohr (39) ein Druckanschlag (59) befestigt ist, der ab einer definierten Einfahrstellung der Kolbenstange (5) wirksam wird.

## Claims

1. Spring support, comprising a vibration damper, which has a cylinder in which a piston rod is guided axially movably, a first and a second spring plate between which a spring is arranged, and an actuator which has a threaded spindle surrounding the piston rod and a threaded nut, via which one of the spring plates can be set axially in its position, a guide tube (39) extending between the piston rod (5) and the threaded spindle (31) and the threaded spindle (31) being supported radially on the guide tube (39), **characterized in that** the guide tube (39) has a connection surface (43) for a connecting bearing (17) of the spring support (1) and the piston rod can execute a relative movement with respect to the connecting bearing (17) via a second bearing (49) supported on the guide tube, the second bearing (49) having a lower spring constant than that of the connecting bearing (17).

2. Spring support according to Claim 1, **characterized in that** the connection surface (43) is formed on a connecting flange (41) of the guide tube (39).

3. Spring support according to Claim 2, **characterized in that** the actuator is designed as a rotary drive (19) and the mounting (53) for a rotor (27) of the rotary drive (19) is supported on the connecting flange (41).

4. Spring support according to Claim 1, **characterized in that** the guide tube (39) is designed so as to be divided in the longitudinal direction.

5. Spring support according to Claim 1, **characterized in that** the guide tube (39) is connected to a housing (21) of the actuator (19).

6. Spring support according to Claim 1, **characterized in that** a pressure stop (59) which becomes effective from a defined retraction position of the piston rod (5) is fastened to the guide tube (39).

## Revendications

1. Support de ressort, comprenant un amortisseur d'oscillations, qui présente un cylindre dans lequel est guidée de manière déplaçable axialement une tige de piston, une première et une deuxième coupelle de ressort, entre lesquelles est disposé un ressort, et un actionneur, qui présente une broche filetée entourant la tige de piston et un écrou fileté, par le biais duquel l'une des coupelles de ressort peut être ajustée axialement en position, un tube de guidage (39) s'étendant entre la tige de piston (5) et la broche filetée (31) et la broche filetée (31) s'appuyant radialement sur le tube de guidage (39),
**caractérisé en ce que**
le tube de guidage (39) présente une surface de raccordement (43) pour un palier de raccordement (17) du support de ressort (1) et la tige de piston peut effectuer un mouvement relatif par rapport au palier de raccordement (17) par le biais d'un deuxième palier (49) qui s'appuie sur le tube de guidage, le deuxième palier (49) présentant une plus faible raideur de ressort que celle du palier de raccordement (17).

2. Support de ressort selon la revendication 1,
**caractérisé en ce que**
la surface de raccordement (43) est réalisée sur une bride de raccordement (41) du tube de guidage (39).

3. Support de ressort selon la revendication 2,
**caractérisé en ce que**
l'actionneur est réalisé sous forme d'entraînement en rotation (19) et le support sur palier (53) pour un rotor (27) de l'entraînement en rotation (19) s'appuie sur la bride de raccordement (41).

4. Support de ressort selon la revendication 1,
**caractérisé en ce que**
le tube de guidage (39) est réalisé de manière divisée dans la direction longitudinale.

5. Support de ressort selon la revendication 1,
**caractérisé en ce que**
le tube de guidage (39) est connecté à un boîtier (21) de l'actionneur (19).

6. Support de ressort selon la revendication 1,
**caractérisé en ce**
**qu'**une butée de pression (59) est fixée sur le tube de guidage (39) et agit à partir d'une position de rétraction définie de la tige de piston (5).
